# EUROPÄISCHE PATENTSCHRIFT

(11) **EP 1 286 751 B1**
(45) Veröffentlichungstag und Bekanntmachung des Hinweises auf die Patenterteilung: **16.02.2005**
(21) Anmeldenummer: 01940466.4
(22) Anmeldetag: 12.05.2001
(51) Int. Cl.: B01D 46/52

(54) **FILTERELEMENT**
FILTER ELEMENT
ELEMENT FILTRANT

(30) Priorität: 20.05.2000 DE 10025141
(43) Veröffentlichungstag der Anmeldung: 05.03.2003
(73) Patentinhaber: Forschungszentrum Karlsruhe GmbH, 76133 Karlsruhe (DE)
(72) Erfinder: LEIBOLD, Hans, D-76316 Malsch-Waldprechtsweier (DE); KRAMER, Jörg, D-72379 Hechingen (DE); MÜLLNER, Ingo, 76133 Karlsruhe (DE)
(86) Internationale Anmeldenummer: PCT/EP2001/005442
(87) Internationale Veröffentlichungsnummer: WO 2001/089663

(56) Entgegenhaltungen:
- WO-A-99/28012
- DE-A- 2 407 316
- DE-A- 19 601 978
- DE-A- 19 837 504
- GB-A- 2 156 232
- GB-A- 2 225 543
- US-A- 5 051 118

## Beschreibung

Die Erfindung betrifft ein Filterelement, welches dichtend in ein Filtergehäuse einsetzbar ist sowie aus einem Faltenpack aus einem Filtermaterial besteht, gemäss dem Oberbegriff des ersten Patentanspruchs.

Filterelemente der eingangs genannten Art sind als quader-, rohr-, ring- oder zylinderförmige Fluidfiltereinsätze, beispielsweise zur Reinigung von partikelbeladenen Gasen, bekannt.

In der DE-A-24 07 316 sowie in der GB-A-2 225 543 werden Filterelemente, bestehend aus einem Faltenpack mit durch Klebstoffraupen verstärkte Faltenrücken beschrieben.

In DE 196 01 978 C2 wird ein Filterelement beschrieben, welches dichtend in ein Filtergehäuse eingesetzt wird. Das Filterelement besteht aus einem hochporösen fliesartigem Filtermaterial, welches zur Vergrößerung der aktiven Filterfläche Zickzackartig zu einem Faltenpack gefaltet wird. Die abstromseitigen Faltenrücken sind über deren gesamten Längen mit einer Lochschlitzmaske verbunden, wobei die Öffnungen der Lochschlitzmaske immer innerhalb der Faltenöffnungen angeordnet sind. Zum Reinigen wird das Filterelement mit Druckluft in Gegenstromrichtung durchströmt, wobei die Öffnungen der Lochschlitzmaske einzeln durchströmt werden. Die dichtende Verbindung zwischen Lochschlitzmaske und den Faltenrücken verhindert dabei ein Überströmen des reinigenden Gegenstromes in benachbarte Falten und erhöht dadurch die Effizienz des Abreinigungseffektes. Die in DE 196 01 978 C2 beschriebene Bauform setzt jedoch sehr enge Toleranzen bei der Fertigung des Faltenpacks voraus, da eine unterschiedliche Höhe der Faltenrücken zueinander zu Verschiebungen und Kippungen der Filterflächen und damit zu einer Reduzierung der Filtereffizienz oder zu einem erhöhten Fertigungsaufwand führen können.

Ferner wird in der DE 198 37 504 A1 ein Filterelement, bestehend aus einem Faltenpack mit durch Klebstoffraupen verstärkte Faltenrücken beschrieben. Im Sinne einer rationellen Herstellung wird insbesondere für Filtermaterialien aus Glasfasern bestehende Gewebe vorgeschlagen, diese nach dem Auflegen auf die zuvor mit Klebstoffraupen versehenen Faltenrücken mit einem flüssigen Klebstoff zu tränken.

Der Erfindung liegt die Aufgabe zugrunde, das Filterelement gegenüber des genannten Stands der Technik so zu gestalten, dass einerseits Fertigungsungenauigkeiten bei der Faltenplissierung bei der Fertigung Filterelemente bei gleichzeitiger Substitution einer separaten Lochschlitzmaske als tragendes Element tolerierbar sind'und damit die Fertigung vereinfacht wird, andererseits gezielt die Stabilität und damit die Lebensdauer des Filterelemente erhöht wird.

Die Aufgabe wird durch das in Anspruch 1 beschriebene Filterelement gelöst. Die weiteren Ansprüche geben bevorzugte Ausgestaltungen der Vorrichtung an.

Durch direktes Tränken mit Reaktionsgießharzen oder selbstaushärtenden gießfähigen Kunststoff der Faltenrücken des Filterelementes über die gesamte An- bzw. Abströmfläche entsteht in diesen Bereichen ein Verbundwerkstoff, welcher die Faltenrücken erheblich verstärkt und eine separat aufgeklebte Lochschlitzmaske überflüssig macht. Zudem kann mit einer gezielten Einstellung der Viskosität von Reaktionsgießharz oder selbstaushärtenden gießfähigen Kunststoff je nach Einsatzzweck des Filterelements der Materialübergang von getränktem, d. h. harten und ungetränkten, d. h. weichen vliesartigem Filtermaterial individuell abrupt oder über einen Bereich fließend eingestellt werden. Die Gefahr von Ermüdungsrissen im Filtermaterial am Übergang lässt sich auf diese Weise über einen weichen Übergang deutlich reduzieren.

Ein weiterer Vorteil liegt in der Möglichkeit, die Faltenrücken individuell zu gestalten. Beispielsweise können Faltenrücken rund, d. h. strömungsoptimiert, oder eckig, d. h. optimiert für bestimmte Einbauverhältnisse, gestaltet sein. Die individuelle Gestaltung der Faltenrücken erfolgt dabei entweder über eine entsprechende Knickung oder Biegung des Filtermaterials oder über ein Eingießen der Filterrücken in einer Negativform mit der gewünschten Geometrie.

Das erfindungsgemäße Filterelement wird im folgenden anhand von Zeichnungen zweier Ausführungsformen erläutert:
Fig.1 zeigt ein quaderförmiges Filterelement der ersten Ausführungsform als Prinzipskizze in perspektivischer Darstellung.
Fig. 2 zeigt die Ansicht eines quaderförmiges Filterelement der zweiten, mit in das Filtermaterial eingeprägten Stegen ausgestatteten Ausführungsform als Prinzipskizze.

Beide Ausführungsformen des Filterelementes sind quaderförmig gestaltet und bestehen, wie in Figuren dargestellt, aus einem Faltenpack 1 mit den Faltenrücken 2 und den Filterflächen 3 sowie den beiden Abschlussplatten 4, welche an den Stirnflächen des Faltenpacks senkrecht zu den Faltenrücken dichtend zu den Filterflächen 3 angebracht sind. Der Faltenpack besteht aus einem hochporösen, aus Glas-, Cellulose-, mineralischen und/oder synthetischen Fasern bestehenden Vliesstoff und ist an den Faltenrücken für einen Einbau in ein nicht dargestelltes Filtergehäuse jeweils zweifach gefaltet, sodass die Faltenrücken eine gemeinsame ebene Fläche bilden.

Die Abschlussplatten 4 werden als Fertigbauteile an die Stirnflächen des Filterpacks dichtend angeklebt. Alternativ hierzu können diese Abschlussplatten aus Reaktionsgießharzen oder selbstaushärtenden gießfähigen Kunststoff bestehen, wobei diese in entsprechenden Negativformen gemeinsam mit dem zuvor eingelegten Stirnflächen des Filterpacks vergossen werden. Bei dieser Variante lässt sich der Materialübergang von Abschlussplatte bzw. getränktem Filtermaterial zu den ungetränkten Filterflächen über die Viskosität des Reaktionsgießharzes oder des selbstaushärtenden gießfähigen Kunststoffs mit einem kontinuierlichen Übergangsbereich entsprechend der zuvor beschriebenen Möglichkeit für die Gestaltung der Übergangsbereiche nahe der Faltenrücken ebenso individuell gestalten.

Ebenso sind ring-, rohr- und zylinderförmigen Geometrien des Filterelementes denkbar. Verläuft bei diesen Geometrien die Durchströmungsrichtung parallel zu der rotationssymmetrischen Filterachse, ist die Abschlussplatte entsprechend der zylindrischen Mantelflächen der Stirnflächen des Faltenpacks rohrförmig gestaltet. Bei der zylinderförmigen Geometrie verlaufen zudem die Faltenrücken in zwei Ebenen strahlenförmig zu der rotationssymmetrischen Filterachse und sind dort miteinander dichtend mittels Klebung oder Tränkverfahren fest verbunden. Bei radialer Durchströmung von Filterelementen mit ring- oder rohrförmigen Geometrien sind die Stirnflächen des Filterpacks eben und senkrecht zu der rotationssymmetrischen Filterachse ausgerichtet.

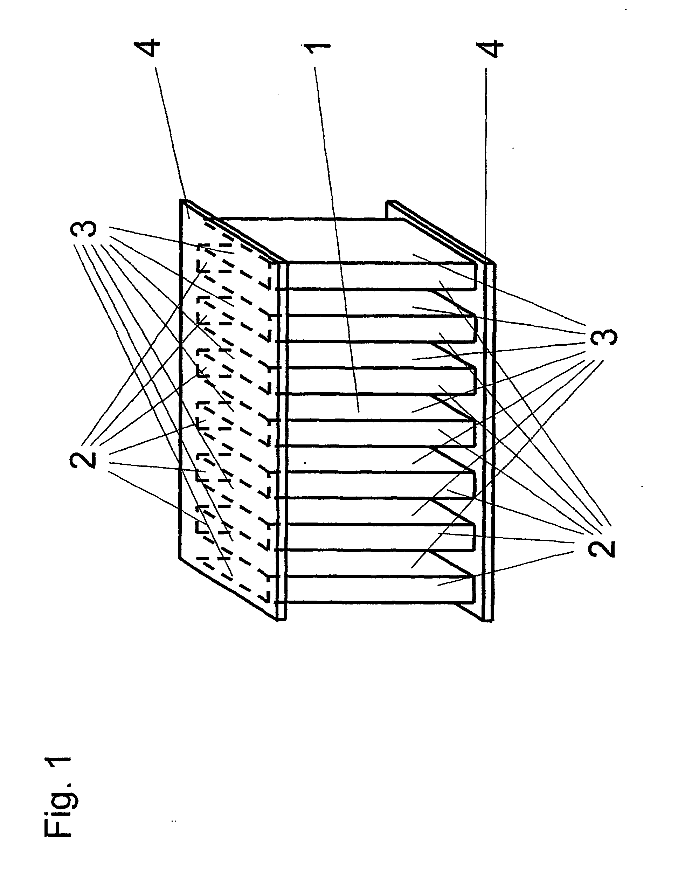

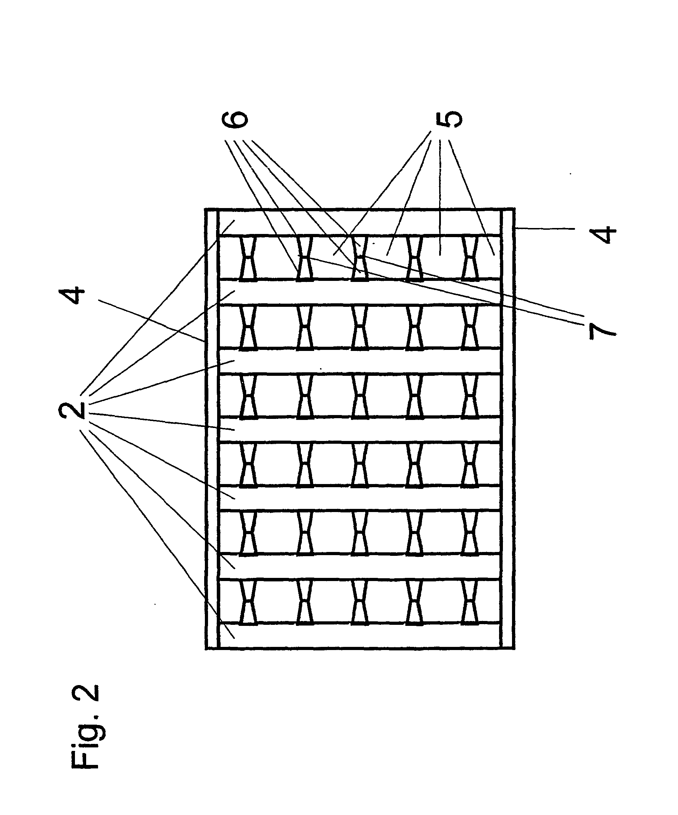

Fig. 2 zeigt die Ansicht der zweiten Ausführungsform, bei der die Filterbereiche jeweils zwischen zwei abluftseitigen Faltenrücken 2 in mehrere Segmente 5 unterteilt sind und sich nur damit von der ersten Ausführungsform gem. Fig. 1 unterscheidet. Die Segmentunterteilungen werden als Strukturen 6 senkrecht zu den Faltenrücken in das Filtermaterial als Stege eingeprägt, wobei sich nach dem Falten des Faltenpacks immer jeweils zwei Stege gegenüberstehen und miteinander dichtend verbunden werden. Für diese Verbindung 7 eignen sich Klebstoffverbindungen. Alternativ ist die Verbindung 7 auch über ein Vergießen oder Tränken beispielsweise mit den für die Bearbeitung der Faltenrücken bekannten Reaktionsgießharzen oder selbstaushärtenden gießfähigen Kunststoff realisierbar.

Verläuft die Segmentierung bis auf die Höhe der Faltenrücken 2, bietet sich an, die Segmentunterteilungen mit den Faltenrücken 2 gemeinsam mit Reaktionsgießharz oder selbstaushärtenden gießfähigen Kunststoff zu tränken oder in einer entsprechenden Negativgießform einzugießen.

Die in das Filtermaterial eingeprägten Strukturen 6 eignen sich, wenn keine zuvor genannte Segmentierung der Filterbereiche zwischen den Faltenrücken gewünscht ist, auch als Verstärkungsrippen oder können zur Vergrößerung der aktiven Filterfläche herangezogen werden. Ein Verkleben von jeweils zwei Strukturen ist in diesem Fall dann nicht mehr erforderlich.

Eine weitere Verstärkung des Filterelementes ist durch direktes Tränken von Reaktionsgießharzen oder selbstaushärtenden gießfähigen Kunststoff auch an die zustromseitigen Faltenrücken des Filterelementes über die gesamte An- bzw. Abströmfläche erzielbar. Da sich hierdurch einerseits die aktive Filterfläche reduziert, andererseits die Zahl der Materialübergangsbereiche von getränktem zu ungetränktem Filtermaterial, d. h. die Ermüdungsriss anfälligen Bereiche erhöht, ist eine derartige Gestaltung des Filterelementes nur in besonderen Einzelfällen sinnvoll.

### Bezugszeichenliste:

- 1: Faltenpack
- 2: Faltenrücken
- 3: Filterflächen
- 4: Abschlussplatten
- 5: Segmente
- 6: Eingeprägte Strukturen
- 7: Verbindung

## Patentansprüche

1. Verfahren zur Herstellung eines Filterelements, bestehend aus einem Faltenpack (1) aus einem porösen, ebenen Filtermaterial mit zu- und abstromseitigen Faltenrücken (2), umfassend die folgenden Verfahrensschritte:
a) Einstellung der Viskosität des Reaktionsgießharzes oder des Kunststoffs, wobei die Einstellung von Eigenschaften eines stetigen, d.h. fließend verlaufenden Übergangs von getränkten Faltenrücken zum benachbarten ungetränkten Filtermaterial über eine Abstimmung der Viskosität auf das Filtermaterial erfolgt,
b) Tränken der abstromseitigen Faltenrücken (2) mit einem Reaktionsgießharz oder einem selbst aushärtenden gießfähigen Kunststoff,
c) Aushärten des Reaktionsgießharzes oder des Kunststoffs, wobei es zu einer Verstärkung der Faltenrücken kommt.

2. Verfahren nach Anspruch 1, umfassend den weiteren Verfahrensschritt:
d) Tränken der zustromseitigen Faltenrücken mit einem Reaktionsgießharz oder einem selbst aushärtenden gießfähigen Kunststoff,

3. Verfahren nach Anspruch 1 oder 2, umfassend die weiteren Verfahrensschritte:
e) Einlegen der Faltenrücken für das Tränken in eine Negativform sowie
f) Einbringen des Reaktionsgießharzes oder des Kunststoffes zu den Faltenrücken in die Negativform.

4. Verfahren nach einem der Ansprüche 1 bis 3, umfassend den weiteren Verfahrensschritt:
e) Einprägen von Strukturen (6) in das Filtermaterial als steifigkeitserhöhende Verstärkungen.

5. Verfahren nach Anspruch 4, umfassend die weiteren Verfahrensschritte:
e) Gestaltung der Strukturen in der Weise, dass diese im zusammengefalteten Filterpack im Bereich zwischen je zwei Faltenrücken (2) paarweise gegeneinander passend zusammenstoßen,
f) Festes jeweils paarweises Verbinden der Strukturen im Filterpack.

6. Verfahren nach einem der Ansprüche 1 bis 5, umfassend den weiteren Verfahrensschritt:
e) Dichtendes Aufkleben von Abschlussplatten (4) an die Stirnflächen des Faltenpacks.

7. Verfahren nach einem der Ansprüche 1 bis 5, umfassend den weiteren Verfahrensschritt:
k) Eintauchen der Stirnflächen des Faltenpacks in eine mit Reaktionsgießharz oder selbst aushärtendem Kunststoff gefüllte Negativform sowie
l) Aushärten des Reaktionsgießharzes oder des Kunststoffes mit den Stirnflächen in der Negativform.

8. Filterelement, welches dichtend in ein Filtergehäuse einsetzbar ist, bestehend aus einem Faltenpack (1) aus einem porösen, ebenen Filtermaterial mit zu- und abstromseitige Faltenrücken (2),
**dadurch gekennzeichnet, dass**
a) die abstromseiten Faltenrücken (2) mit einem ausgehärteten Reaktionsgießharz oder einem ausgehärteten selbst aushärtenden gießfähigen Kunststoff getränkt und verstärkt sind sowie
b) der Übergang von getränkten Faltenrücken zum benachbarten ungetränkten Filtermaterial stetig, d.h. fließend verläuft und die Eigenschaften des Übergangs sich durch eine Abstimmung der Viskosität des Reaktionsgießharzes oder des selbstaushärtenden gießfähigen Kunststoffs auf das Filtermaterial bestimmt.

9. Filterelement nach Anspruch 8, **dadurch gekennzeichnet, dass** die zustromseiten Faltenrücken (2) mit einem ausgehärteten Reaktionsgießharz oder einem ausgehärteten selbst aushärtenden gießfähigen Kunststoff getränkt und verstärkt sind.

10. Filterelement nach Anspruch 8 oder 9, **dadurch gekennzeichnet, dass** die an den Faltenrücken (2) angegossenen ausgehärteten Reaktionsgießharze oder Kunststoffe die Form einer Lochschlitzmaske aufweisen.

11. Filterelement nach einem der Ansprüche 8 bis 10, **dadurch gekennzeichnet, dass** das Filtermaterial eingeprägte Strukturen (6) als steifigkeitserhöhende Verstärkung aufweist.

12. Filterelement nach Anspruch 11, **dadurch gekennzeichnet, dass** die Strukturen senkrecht zu den Faltenrücken ausgerichtet sind.

13. Filterelement nach Anspruch 11 oder 12, **dadurch gekennzeichnet, dass** die eingeprägten Strukturen (6) im zusammengefalteten Filterpack im Bereich zwischen je zwei Faltenrücken (2) paarweise gegeneinander passend zusammenstoßend angeordnet sind und fest verbindbar sind sowie die Filterbereiche zwischen je zwei Faltenrücken (2) durch die Strukturen in mehrere Filtersegmente unterteilt sind.

14. Filterelement nach einem der Ansprüche 8 bis 13, **dadurch gekennzeichnet, dass** das Filterelement quader-, rohr- oder ringförmig gestaltet ist und an den Stirnflächen des Filterpacks senkrecht zu den Faltenrücken (2) dichtend an Abschlussplatten (4) anschließt.

15. Filterelement nach einem der Ansprüche 8 bis 13, **dadurch gekennzeichnet, dass** das Filterelement rohr-, ring oder zylinderförmig gestaltet ist, die Durchströmungsrichtung parallel zur Zylinderachse gerichtet ist, an der Stirnfläche des Filterpacks am Zylinderumfang senkrecht zu den Faltenrücken dichtend an eine rohrförmige Abschlussplatte anschließt und die Faltenrücken (2) und Filterflächen (3) an der Zylinderachse dichtend zusammenlaufen.

16. Filterelement nach Anspruch 14 oder 15, **dadurch gekennzeichnet, dass** die Abschlussplatten (4) an die Stirnflächen dichtend aufgeklebt sind.

17. Filterelement nach einem der Ansprüche 8 bis 10, **dadurch gekennzeichnet, dass** die Abschlussplatten (4) durch ein ausgehärtetes Reaktionsgießharz oder ein selbstaushärtenden gießfähigen Kunststoff mit eingetauchten Stirnseiten gebildet wird.

## Claims

1. Method for the production of a filter element, consisting of a pleat pack (1) made of a porous, plane filter material with pleat ridges (2) on the inflow and outflow sides, comprising the following steps:
a) Adjustment of the viscosity of the reaction casting resin or plastic, such that a continuous, i.e. smooth, transition from the drenched pleat ridges to the adjacent undrenched filter material is obtained,
b) drenching of the pleat ridges on the outflow sides (2) with a reaction casting resin or a self-hardening castable plastic,
c) hardening of the reaction casting resin or plastic, as a result of which the pleat ridges are reinforced.

2. Method according to Claim 1, comprising the additional step of:
d) Drenching of the pleat ridges on the inflow sides with a reaction casting resin or a self-hardening castable plastic.

3. Method according to Claim 1 or 2, comprising the additional steps of:
e) Insertion of the pleat ridges into a negative mold for drenching, and
f) pouring of the reaction casting resin or plastic into the negative mold onto the pleat ridges.

4. Method according to one of Claims 1 through 3, comprising the additional step of:
g) Embossing of structures (6) into the filter material to increase stiffness.

5. Method according to Claim 4, comprising the additional steps of:
h) Design of the structures such that these fit pairwise in the folded filter pack between two pleat ridges (2) each,
i) permanent pairwise connection of the structures in the filter pack.

6. Method according to one of Claims 1 through 5, comprising the additional step of:
j) Tight bonding of the cover plates (4) to the front surfaces of the pleat pack.

7. Method according to one of Claims 1 through 5, comprising the additional steps of:
k) Immersion of the front surfaces of the pleat pack into a negative mold filled with reaction casting resin or self-hardening plastic, and
I) hardening of the reaction casting resin or plastic with the front surfaces in the negative mold.

8. Filter element that may be inserted tightly into a filter housing and consists of a pleat pack (1) made of a porous, plane filter material with pleat ridges (2) on the inflow and outflow sides, **characterized by**:
a) The pleat ridges (2) on the outflow sides being drenched and reinforced by a hardened reaction casting resin or a hardened self-hardening castable plastic and
b) the transition from the drenched pleat ridges to the adjacent undrenched filter material being continuous, i.e. smooth, and the properties of this transition depending on the adjustment of the viscosity of the reaction casting resin or the self-hardening castable plastic on the filter material.

9. Filter element according to Claim 8, **characterized by** the pleat ridges (2) on the inflow sides being drenched and reinforced by the hardened reaction casting resin or a hardened self-hardening castable plastic.

10. Filter element according to Claim 8 or 9, **characterized by** the hardened reaction casting resins or plastics cast onto the pleat ridges (2) having the form of a slotted-hole mask.

11. Filter element according to one of Claims 8 through 10, **characterized by** the filter material possessing embossed structures (6) to increase stiffness.

12. Filter element according to Claim 11, **characterized by** the structures being oriented vertical to the pleat ridges.

13. Filter element according to Claim 11 or 12, **characterized by** the embossed structures (6) fitting pairwise in the folded filter pack in the range between two pleat ridges (2) each and by the fact that they may be connected permanently as well as by the structures dividing the filter ranges between two pleat ridges (2) each into several filter segments.

14. Filter element according to one of Claims 8 through 13, **characterized by** the filter element being of box-shaped, tubular or annular design and fitting tightly to the cover plates (4) vertical to the pleat ridges (2) at the front surfaces of the filter pack.

15. Filter element according to one of Claims 8 through 13, **characterized by** the filter element being of tubular, annular, or cylindrical design, the flow direction being parallel to the cylinder axis, its tight fitting to a tubular cover plate at the front surface of the filter pack on the cylinder circumference vertical to the pleat ridges, and the pleat ridges (2) and filter surfaces (3) merging tightly at the cylinder axis.

16. Filter element according to Claim 14 or 15, **characterized by** the cover plates (4) being bonded tightly to the front surfaces.

17. Filter element according to one of Claims 8 through 10, **characterized by** the cover plates (4) being formed by a hardened reaction casting resin or a self-hardening castable plastic with immersed front surfaces.

## Revendications

1. Procédé de fabrication d'un élément filtrant, composé d'un paquet de plis (1 ) en un matériau filtrant poreux, plan, au dos de plis côté amont et aval (2), qui comprend les étapes suivantes:
a) Réglage de la viscosité de la résine moulée de réaction ou de la matière plastique, le réglage des caractéristiques d'un passage continu, fluide, entre le dos de plis imprégné et le matériau filtrant voisin non imprégné se faisant par l'intermédiaire d'un adaptation de la viscosité au matériau filtrant,
b) Imprégnation des dos de plis aval (2) par une résine moulée de réaction ou un matière plastique coulable autodurcissante,
c) Durcissement de la résine moulée de réaction ou de la matière plastique, entraînant le renforcement des dos de plis.

2. Procédé selon la revendication 1, comprenant en outre l'étape suivante:
d) Imprégnation des dos de plis amont par une résine coulée de réaction ou une matière plastique coulable autodurcissante,

3. Procédé selon la revendication 1 ou 2, comprenant en outre les étapes suivantes:
e) Placement des dos de plis dans un moule négatif pour l'imprégnation ainsi que
f) Addition de la résine coulée de réaction ou de la matière plastique au dos de plis dans le moule négatif.

4. Procédé selon l'une quelconque des revendications 1 à 3, comprenant en outre l'étape suivante:
e) Estampage de structures (6) dans le matériau filtrant comme renforcements augmentant la rigidité.

5. Procédé selon la revendication 4, comprenant en outre les étapes suivantes:
e) Réalisation des structures telle que celles-ci, dans le paquet de filtre plié, dans chaque espace entre deux dos de plis (2), aboutent deux à deux, ajustées les unes aux autres.
f) Assemblage fixe, deux à deux, de chaque paire de structures dans le paquet de filtre.

6. Procédé selon l'une quelconque des revendications 1 à 5, comprenant en outre l'étape suivante:
e) Collage serré de plaques de fermeture (4) sur les surfaces de contact du paquet de plis.

7. Procédé selon l'une quelconque des revendications 1 à 6, comprenant en outre l'étape suivante.
k) Immersion des surfaces de contact du paquet de plis dans un moule négatif rempli de résine coulée de réaction ou de matière plastique autodurcissante ainsi que
I) Durcissement de la résine coulée de réaction ou de la matière plastique avec les surfaces de contact dans le moule négatif.

8. Elément filtrant pouvant être introduit de façon serrée dans un boîtier de filtre, composé d'un paquet de plis (1) en un matériau poreux, plan, au dos de plis en amont et en aval (2),
**caractérisé en ce que**
a) les dos de plis en aval (2) sont imprégnés par une résine coulée de réaction durcie ou par une matière plastique coulable autodurcissante durcie, et renforcés ainsi que
b) le passage entre les dos de plis imprégnés et le matériau filtrant voisin non imprégné est continu, c'est-à-dire fluide et que les caractéristiques du passage sont déterminées par l'adaptation de la viscosité de la résine coulée de réaction ou de la matière plastique coulable autodurcissante au matériau filtrant.

9. Elément filtrant selon la revendication 8, **caractérisé en ce que** les dos de plis en amont (2) sont imprégnés par une résine coulée de réaction durcie ou par une matière plastique coulable autodurcissante, et renforcés.

10. Elément filtrant selon la revendication 8 ou 9, **caractérisé en ce que** les résines coulées de réaction ou les matières plastiques durcies, jointes par coulées au dos de plis (2) ont la forme d'un masque à trous en fentes.

11. Elément filtrant selon l'une quelconque des revendications 8 à 10, **caractérisé en ce que** le matériau filtrant présente des structures estampées (6) comme renforcement augmentant la rigidité.

12. Elément filtrant selon la revendication 11, **caractérisé en ce que** les structures ont une orientation perpendiculaire par rapport au dos de plis.

13. Elément filtrant selon la revendication 11 ou 12, **caractérisé en ce que** les structures estampées (6) , dans le paquet de filtre plié, dans chaque espace entre deux dos de plis (2), aboutent deux à deux, ajustées les unes aux autres et peuvent être fermement liées et que chacune des zones de filtre situées entre deux dos de plis (2) est divisée par les structures en plusieurs segments de filtre.

14. Elément filtrant selon l'une quelconque des revendications 8 à 13, **caractérisé en ce que** cet élément filtrant a une forme parallèllépipédique, tubulaire ou annulaire et qu'aux surfaces de contact du paquet de filtre, il est joint de façon étanche à des plaques de fermeture (4), en position perpendiculaire par rapport aux dos de plis (2).

15. Elément filtrant selon l'une quelconque des revendications 8 à 13, **caractérisé en ce que** cet élément filtrant a une forme tubulaire, annulaire ou cylindrique, que la direction de passage est orientée parallèlement à l'axe du cylindre, qu'aux surfaces de contact du paquet de filtre sur le périmètre du cylindre, il est joint de façon étanche, en position perpendiculaire par rapport aux dos de plis, à une plaque de fermeture tubulaire, et que les dos de plis (2) et les surfaces filtrantes (3) convergent d'une façon étanche sur l'axe du cylindre.

16. Elément filtrant selon la revendication 14 ou 15, **caractérisé en ce que** les plaques de fermeture (4) sont collées de façon étanche sur les surfaces de contact.

17. Elément filtrant selon l'une quelconque des revendications 8 à 10, **caractérisé en ce que** les plaques de fermeture (4) sont formées par une résine coulée de réaction durcie ou par une matière plastique coulable autodurcissante aux surfaces de contact immergées.
